**Europäisches Patentamt**

**European Patent Office**

**Office européen des brevets**

(19)

(11) Veröffentlichungsnummer: **0 411 241 B1**

(12) # EUROPÄISCHE PATENTSCHRIFT

(45) Veröffentlichungstag der Patentschrift: **01.12.93**

(51) Int. Cl.⁵: **F16F 13/00**

(21) Anmeldenummer: **90104302.6**

(22) Anmeldetag: **07.03.90**

---

(54) **Hydraulisch gedämpftes Lager für einen Kolbenmotor.**

---

(30) Priorität: **03.08.89 DE 3925712**

(43) Veröffentlichungstag der Anmeldung:
**06.02.91 Patentblatt 91/06**

(45) Bekanntmachung des Hinweises auf die
Patenterteilung:
**01.12.93 Patentblatt 93/48**

(84) Benannte Vertragsstaaten:
**AT BE CH DE DK ES FR GB GR IT LI LU NL SE**

(56) Entgegenhaltungen:
**DE-A- 3 619 685**
**GB-A- 2 186 052**
**US-A- 4 709 779**
**US-A- 4 796 874**

**Automobil-Industrie no. 5, 1985, Seiten 553 - 560; J.H.Spurk et al.: "Theorie des Hydrolagers"**

(73) Patentinhaber: **Firma Carl Freudenberg**
**Höhnerweg 2-4**
**D-69465 Weinheim(DE)**

(72) Erfinder: **Freudenberg, Ulrich, Dr.**
**Büttemer Weg 26**
**D-6945 Hirschberg(DE)**
Erfinder: **Freudenberg, Tillman, Dr.**
**Hügelstrasse 49**
**D-6940 Weinheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein hydraulisch gedämpftes Lager nach dem Oberbegriff von Anspruch 1.

Ein solches Lager ist bekannt aus der DE-OS 36 19 685. Die Wirklänge der Leitung läßt sich dabei durch Betätigung eines Ventils beliebig vergrößern und verkleinern, um eine auf Resonanzeffekten beruhende Dämpfungswirkung in einem möglichst breiten Frequenzbereich zu erzielen. In bezug auf die Isolierung von Schwingungen, die bei Erreichen der Leerlaufdrehzahl des durch das Lager abgestützten Kolbenmotors auftreten, ist das wenig befriedigend insofern, als sich derartige Schwingungen störend in der Karosserie bemerkbar machen.

Der Erfindung liegt die Aufgabe zugrunde, ein solches Lager derart weiterzuentwickeln, daß sich bei guter Dämpfung der fahrbahnerregten, niederfrequenten Schwingungen eine gute Isolierung von Schwingungen ergibt, die von dem Kolbenmotor bei Erreichen der Leerlaufdrehzahl ausgehen.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Lager ist es vorgesehen, daß der Abstand des Entlastungsventils von den beiderseitigen Mündungen so bemessen ist, daß die in dem die Wirklänge beschreibenden Längenabschnitt enthaltene Flüssigkeitsmasse bei Einleitung von Schwingungen einer der Leerlaufdrehzahl entsprechenden Frequenz in das Auflager in eine mit dem Auflager im wesentlichen gleichphasig schwingende Relativbewegung versetzt wird, wobei die Relativbewegung eine Amplitude aufweist, die größer ist als die Amplitude des Auflagers, multipliziert mit dem Verhältnis aus dem Verdrängungsquerschnitt des Federelementes und dem Querschnitt der Leitung. Der Betrag der dynamischen Steifigkeit des Lagers ist hierdurch bei Erreichen der Leerlaufdrehzahl kleiner als bei Motorstillstand, wodurch die von dem Kolbenmotor bei Erreichen der Leerlaufdrehzahl ausgehenden Schüttelbewegungen in ausgezeichneter Weise isoliert werden. Resonanzüberhöhte Schwingungsausschläge des Motors sind bei Erreichen dieses Betriebszustandes nicht zu befürchten. Die Betriebssicherheit ist daher in keiner Weise gefährdet. Der Verdrängungsquerschnitt bezeichnet in diesem Zusammenhang denjenigen Flächenbestandteil des Federelementes, der bei einer Ein- oder Ausfederung des Auflagers kolbenartig wirksam ist.

Aus einem Fachaufsatz von Spurk/Andrä, "Theorie des Hydrolagers", veröffentlicht in Automobilindustrie 5/85, Bild 3, Seite 554 ist es bekannt, daß die dynamische Steifigkeit bei hydraulisch gedämpften Motorlagern der vorstehend zur Diskussion stehenden Art unterhalb der Resonanzfrequenz der in der Leitung enthaltenen Flüssigkeitsmasse eine Absenkung erfährt. Die Ausnutzung diesen Effektes für die Erzielung einer guten Isolierung des Leerlaufschüttelns wird in dem genannten Aufsatz nicht erwähnt.

Im Rahmen der vorliegenden Erfindung ist es nunmehr vorgesehen, diesen Effekt in gezielter Weise auszunutzen und die Abstimmung so vorzunehmen, daß sich bei Erreichen der Leerlaufdrehzahl des abgestützten Kolbenmotors eine größtmögliche Weichheit des den Kolbenmotor abstützenden Lagers ergibt.

In konstruktiver Hinsicht ist es gleichgültig, ob das Entlastungsventil in dem Arbeits- oder in dem Ausgleichsraum angeordnet ist weil sich hiervon unabhängig bei einer Betätigung stets eine Verkürzung der Wirklänge der Leitung ergibt. Diejenige Mündung der Leitung, die jedoch mit dem Entlastungsventil gemeinsam in denselben Raum mündet, sollte hinsichtlich ihres Durchtrittsquerschnittes verengt sein, um bei geschlossenem Entlastungsventil eine breitbandigere Dämpfungswirkung zu gewährleisten, was beispielsweise in bezug auf eine Unterdrückung von starken Bewegungen des Kolbenmotors oberhalb der Leerlaufdrehzahl von Vorteil ist.

Die Leitung sollte in den übrigen Bereichen einen Drucktrittsquerschnitt haben, der wenigstens 100 mm$^2$ umfaßt. Hierzu ist anzumerken, daß die Massenwirkung der Leitung durch die Formel

$$\omega o \times L / A$$

charakterisiert ist. $\omega o$ bedeutet hierin die Dichte der in der Leitung enthaltenen Flüssigkeit, L die Länge der Leitung und A den Querschnitt der Leitung. In Verbindung mit der Blähelastizität des Federelementes und seinem hydraulischen Verdrängungsquerschnitt ist es somit grundsätzlich möglich, eine gleichwertig erscheinende Abstimmung auf eine bestimmte Frequenz unter Verwendung einer Leitung von großer Länge und großen Querschnitt vorzunehmen oder kleiner Länge und kleinem Querschnitt. Im Rahmen der vorliegenden Erfindung gelangt bevorzugt eine Leitung zur Anwendung, die einen Querschnitt aufweist, welcher so groß ist, wie unter konstruktiven Gesichtspunkten irgend möglich. Hierdurch werden bei Einleitung von Schwingungen in das Auflager im Vergleich zu üblichen Lagern erheblich vergrößerte Flüssigkeitsmassen mit vergleichsweise verminderter Geschwindigkeit hin- und herverlagert, was einerseits eine besonders deutliche Ausprägung der Resonanzüberhöhung der Flüssigkeitsbewegung im Resonanzfalle bedingt und andererseits eine Absenkung der dynamischen Federsteifigkeit in dem Frequenzbereich unterhalb der Resonanzfrequenz. Unter diesem Gesichtspunkt hat es es sich als zweckmäßig bewährt, wenn die Leitung einen Querschnitt aufweist, der wenigstens 100 mm² umfaßt.

Das Entlastungsventil sollte einen Querschnitt haben, der wenigstens so groß ist wie der Querschnitt der Leitung. Es vermag bei einer solchen Ausbildung die Relativbewegung der gegebenenfalls durchtretenden Flüssigkeitsbestandteile nicht zusätzlich zu hemmen.

Der Gegenstand der Erfindung wird nachfolgend anhand der Zeichnung verdeutlicht. Es zeigen:

Figur 1
Ein Diagramm, in welchem die dynamische Steifigkeit über der Frequenz aufgetragen ist.
Figur 2
Eine beispielhafte Ausführung eines Lagers.

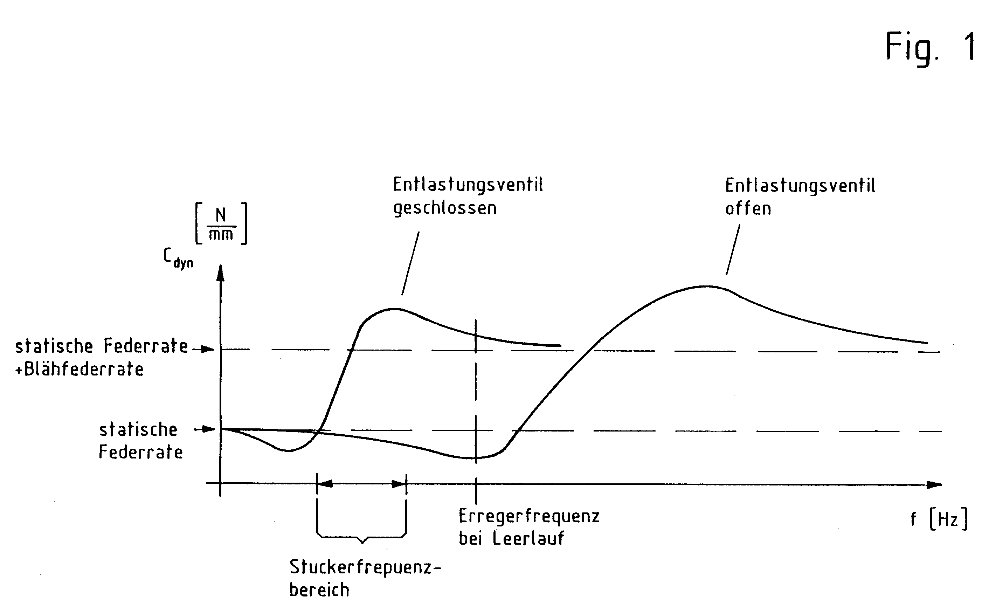

In dem in Figur 1 gezeigten Diagramm ist die dynamische Steifigkeit aufgetragen über der Frequenz der unter normalen Betriebsbedingungen eingeleiteten Schwingungen. Das Diagramm weist zwei Kurvenverläufe auf. Der linke Kurvenverlauf zeigt das Verhalten des Lagers bei geschlossenem Entlastungsventil. Dabei ergibt sich im Bereich der Stuckerfrequenzen ein steifes, dämpfendes System. Durch öffnen des Entlastungsventils läßt sich die Kurve soweit zu höheren Frequenzen verschieben, daß das Minimum der Steifigkeit mit der Erregerfrequenz des Systems im Leerlaufzustand des abgestützten Kolbenmotors zusammenfällt. Das Motorlager weist hierdurch eine besonders große Nachgiebigkeit und Weichheit bei Erreichen der Leerlaufdrehzahl auf, wodurch eine optimale Entkopplung der Leerlaufschüttelbewegungen des Kolbenmotors erreicht wird.

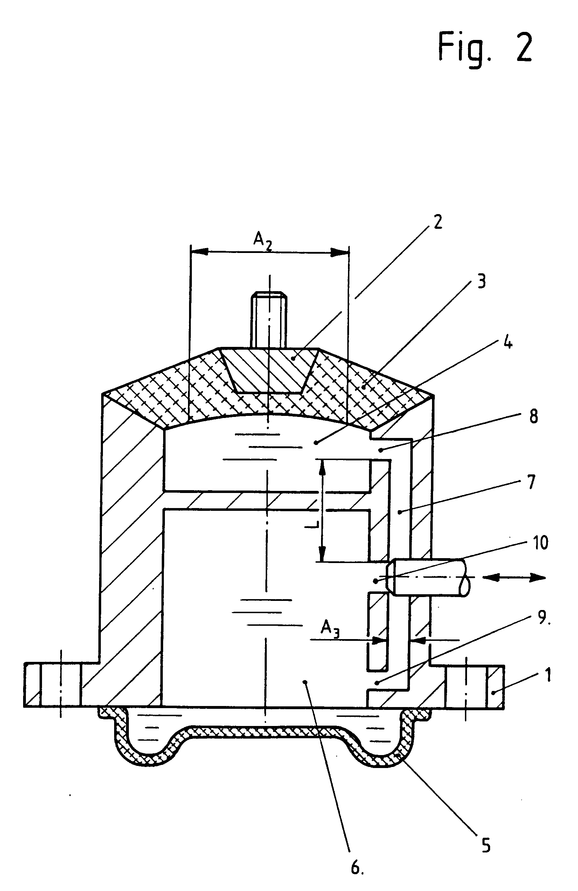

In Figur 2 ist ein Lager der erfindungsgemäßen Art in längsgeschnittener Darstellung wiedergegeben. Dieses ist für die Lagerung eines Kolbenmotors in einem Kraftfahrzeug bestimmt und umfaßt einen von einem Traglager 1, einem Auflager 2 und einem gummielastischen Federelement 3 umschlossenen, flüssigkeitsgefüllten Arbeitsraum 4 sowie einen durch eine nachgiebige Wandung 5 begrenzten Ausgleichsraum 6, der durch eine kanalartig ausgebildete Leitung 7 mit dem Arbeitsraum 4 verbunden ist. Die Leitung 7 ist durch ein in ihrer Seitenwandung in einem Abstand von den beiderseitigen Mündungen 8, 9 angeordnetes, willkürlich betätigbares Entlastungsventil 10 in ihrer Wirklänge 11 verkürzbar und hinsichtlich ihrer Dimensionen derart mit der Ausbauchungselastizität des Federelementes 3 abgestimmt, daß die in der Leitung befindliche Flüssigkeitsmasse bei Einleitung von Schwingungen in das Auflager, die der Dämpfung bedürfen, in eine, bezogen auf die Relativbewegungen des Auflagers, im wesentlichen gegenphasige Resonanzbewegung gelangt. Schwingungen dieser Art werden gewöhnlich als Stuckerbewegungen bezeichnet und treten in Abhängigkeit von dem Betriebsverhalten und Gewicht des jeweiligen Kolbenmotors nur bei einer ganz bestimmten Frequenz bevorzugt auf. Die Anpassung an die diesbezüglichen Erfordernisse bereitet dem Fachmann keine Schwierigkeiten und wird beispielsweise in dem eingangs erwähnten Aufsatz Spurk/Andrä ausführlich beschrieben.

Abweichend von dem Bekannten ist es bei der Ausführung nach Figur 2 indessen vorgesehen, daß der Abstand des Entlastungsventils 10 von den beiderseitigen Mündungen so bemessen ist, daß die in dem die Wirklänge L beschreibenden Längenabschnitt enthaltene Flüssigkeitsmasse bei Einleitung von Schwingungen einer der Leerlaufdrehzahl des Kolbemotors entsprechenden Frequenz in das Auflager 2 in eine mit dem Auflager 2 im wesentlichen gleichphasig schwingende Relativbewegung versetzt wird und daß die Relativbewegung eine Amplitude aufweist, die größer ist als die Amplitude des Auflagers 2, multipliziert mit dem Verhältnis aus dem Verdrängungsquerschnitt A2 des Federelementes und dem Querschnitt A3 der Leitung 7. Bei Erreichen der Leerlaufdrehzahl wird der Kolbenmotor hierdurch auf einer Feder abgestützt, die sich weicher und nachgiebiger verhält als bei höheren Motordrehzahlen und bei Motorstillstand. Für die Erzielung einer guten Isolierung des Motorschüttelns bei Erreichen der Leerlaufdrehzahl ist das von großem Vorteil. Das Entlastungsventil 10 und die Leitung 7 sind so ausgeführt, daß bei geschlossenem Entlastungsventil 10 die Leitung 7 zwischen der Mündung 8 und der Mündung 9 nicht blockiert oder in einer die Relativbeweglichkeit der Flüssigkeit nennenswert behindernder Weise vereint ist.

**Patentansprüche**

1. Hydraulisch gedämpftes Lager für einen Kolbenmotor, umfassend einen von einem Traglager (1), einem Auflager (2) und einem gummielastischen Federelement (3) umschlossenen, flüssigkeitsgefüllten Arbeitsraum (4) und einen durch eine nachgiebige Wandung (5) begrenzten Ausgleichsraum (6), der durch eine kanalartig ausgebildete Leitung (7) mit dem Arbeitsraum (4) verbunden ist, wobei die Leitung (7) und die Ausbauchungselastizität des Federelementes (3) so aufeinander abgestimmt sind, daß die in der Leitung (7) befindliche Flüssigkeitsmasse bei Einleitung von Schwingungen in das Auflager (2), die eine willkürlich vorgegebene Frequenz haben, in eine Resonanzbewegung gelangt und wobei die Leitung (7) durch ein in ihrer Seitenwandung in einem Abstand von den beiderseitigen Mündungen (8, 9) angeordnetes, willkürlich betätigbares Entlastungsventil (10) in ihrer Wirklänge (L) verkürzbar ist, dadurch gekennzeichnet, daß der Abstand des Entlastungsventils von den beiderseitigen Mündungen (8, 9) so bemessen ist, daß die in dem die Wirklänge (L) beschreibenden Längenabschnitt enthaltene Flüssigkeitsmasse bei Einleitung von Schwingungen einer der Leerlaufdrehzahl entsprechenden Frequenz in das Auflager in eine mit dem Auflager im wesentlichen gleichphasig schwingende Relativbewegung versetzt wird und daß die Relativbewegung eine Amplitude aufweist, die größer ist als die Amplitude des Auflagers (2), multipliziert mit dem Verhältnis aus dem Verdrängungsquerschnitt (Aq) des Federelementes (3) und dem Querschnitt (A3) der Leitung (7).

2. Lager nach Anspruch 1, dadurch gekennzeichnet, daß diejenige Mündung, die mit dem Entlastungsventil (10) gemeinsam in denselben Raum mündet, einen Querschnitt aufweist, der im Vergleich zu dem Querschnitt (A3) der Leitung (7) relativ verengt ist.

3. Lager nach Anspruch 1 bis 2, dadurch gekennzeichnet, daß die Leitung (7) einen Querschnitt (A3) aufweist, der wenigstens 100 mm$^2$ umfaßt.

4. Lager nach Anspruch 1 bis 3, dadurch gekennzeichnet, daß das Entlastungsventil (10) einen Durchtrittsquerschnitt aufweist, der wenigstens so groß ist wie der Querschnitt (A3) der Leitung (7).

## Claims

1. A hydraulically damped mount for a piston engine, comprising a fluid-filled working space (4), enclosed by a supporting bearing (1), a bed (2) and an elastomeric spring element (3), and a compensating space (6) which is limited by a flexible wall (5) and which is connected to the working space (4) by means of a channel-like line (7), the line (7) and the bulging elasticity of the spring element (3) being coordinated with one another in such a way that the fluid mass located in the line (7) is set in resonant movement when vibrations having a randomly predetermined frequency are introduced into the bed (2), and the effective length (L) of the line (7) being capable of being reduced by a randomly actuable release valve (10) arranged in the sidewall of the line (7) at a distance from the mouths (8, 9) located on both sides, characterised in that the distance of the release valve from the mouths (8, 9) located on both sides is calculated so that, when vibrations of a frequency corresponding to the idling speed are introduced into the bed, the fluid mass contained in the length portion describing the effective length (L) is set in a relative movement vibrating essentially in phase with the bed, and in that the relative movement has an amplitude which is higher than the amplitude of the bed (2), multiplied by the ratio of a displacement cross-section (A$_2$) of the spring element (3) and the cross-section (A$_3$) of the line (7).

2. A mount according to claim 1, characterised in that that mouth which opens jointly with the release valve (10) into the same space has a cross-section which is relatively narrowed in comparison with the cross-section (A$_3$) of the line (7).

3. A mount according to either of claims 1 and 2, characterised in that the line (7) has a cross-section (A$_3$) which holds at least 100 mm$^2$.

4. A mount according to any of claims 1 to 3, characterised in that the release valve (10) has a passage cross-section which is at least as large as the cross-section (A$_3$) of the line (7).

## Revendications

1. Support à amortissement hydraulique pour un moteur à piston, comprenant une enceinte de travail (4) remplie de liquide et entourée par un support porteur (1), un appui (2) et un élément élastique en caoutchouc (3), et une enceinte d'équilibrage (6) délimitée par une paroi élastique (5) qui est connectée à l'enceinte de travail (4) par une conduite (7) en forme de canal, dans lequel la conduite (7) et l'élasticité d'expansion de l'élément élastique (3) sont adaptées l'une à l'autre de façon que la masse de liquide se trouvant dans la conduite (7) soit soumise à un déplacement en résonance lorsqu'apparaissent dans l'appui (2) des vibrations ayant une fréquence arbitraire prédéterminée, et dans lequel la conduite (7) peut subir un raccourcissement de sa longueur efficace (L) au moyen d'une vanne de décharge (10) manoeuvrable à volonté et disposée dans l'une de ses parois latérales à une certaine distance des deux orifices de part et d'autre (8, 9), caractérisé en ce que la distance de la vanne de décharge par rapport aux deux orifices de part et d'autre (8, 9) est choisie de façon que la masse de liquide contenue dans la section de longueur déterminant la longueur efficace (L) soit déplacée suivant un mouvement relatif oscillant essentiellement en phase avec l'appui lorsque des vibrations apparaissent dans l'appui d'une fréquence correspondant au régime de marche à vide et que le déplacement relatif présente une amplitude supérieure à l'amplitude de l'appui (2) multipliée par le rapport de la section de déplacement (A2) de l'élément élastique (3) et de la section (A3) de la conduite (7).

2. Support selon la revendication 1, caractérisé en ce que l'orifice qui débouche avec la vanne de décharge (10) dans la même enceinte présente une section qui est relativement rétrécie par rapport à la section (A3) de la conduite (7).

3. Support selon les revendications 1 et 2, caractérisé en ce que la conduite (7) présente une section (A3) égale à au moins 100 mm$^2$.

4. Support selon les revendications 1 à 3, caractérisé en ce que la vanne de décharge (10) présente une section de passage qui est au moins aussi grande que la section (A3) de la conduite (7).

Fig. 1

# Fig. 2